# EUROPEAN PATENT APPLICATION

(11) **EP 2 408 172 A2**
(43) Date of publication of application: **18.01.2012**
(21) Application number: 10194985.7
(22) Date of filing: 14.12.2010
(51) Int. Cl.: H04L 29/08, H04W 4/02, G01C 21/36, G09B 29/00, G06F 17/30, G06F 12/08

(54) **Efficient generation of static bitmaps**

(30) Priority: 15.07.2010 US 364617 P
(71) Applicant: Research In Motion Limited, Waterloo, ON N2L 3W8 (CA)
(72) Inventor: Watt, Robert Anthony, Kanata Ontario K2K 2A5 (CA)
(74) Representative: Patel, Binesh

(57) **Abstract**

A method of generating a bitmap entails transmitting a request for map data from a computing device to a map server, the request comprising a location for a map, a height of the map, a width of the map, and an image format. The method further entails receiving the map data for the map in response to transmitting the request for map data, and generating the bitmap locally on the computing device. The method may also involve obtaining customized overlay map data for combining with the other map data to generate the bitmap.

## Description

### TECHNICAL FIELD

The present technology relates to mapping software and computer-based mapping and, in particular, to application programming interfaces (APIs) for generating maps.

### BACKGROUND

Conventionally, application developers wishing to provide a static bitmap for an application that they are developing must program the application to make a server call to a map server or web site to request generation and delivery of the static bitmap. To make this server call requires that the developer provide a chunk of code for making the call to the correct uniform resource locator (URL) and then for specifying how to interact with the web site in order to obtain the bitmap of the correct location, of the desired size, of the proper zoom level, etc. Further complication arises if the developer wishes to overlay any additional customized data on the bitmap generated by the map server.

A more efficient technique for generating a static bitmap would thus be highly desirable.

### BRIEF DESCRIPTION OF THE DRAWINGS

Further features and advantages of the present technology will become apparent from the following detailed description, taken in combination with the appended drawings, in which:

FIG. 1 is a flowchart outlining some of the main steps of a novel method of generating a static bitmap in accordance with principal implementations of the present technology; and

FIG. 2 depicts an example of a novel system for generating a static bitmap in accordance with principal implementations of the present technology; and

FIG. 3 depicts an example of a basic map without any third-party overlay data;

FIG. 4 depicts an example of the map of FIG. 3 overlaid with a first set of overlay data;

FIG. 5 depicts an example of the map of FIG. 4 overlaid with additional overlay data; and

FIG. 6 depicts an example of the map of FIG. 3 with only a second type of overlay data.

It will be noted that throughout the appended drawings, like features are identified by like reference numerals.

### DETAILED DESCRIPTION

In general, the present technology provides an innovative technique for efficiently generating a static bitmap. This enables the application developer to generate a static bitmap without having to initialize the entire mapping system. This is accomplished by providing a specific application programming interface (API) that makes a single, simplified server call to a map server (or map service hosted at a web site). The single, simplified server call specifies the location of the map (e.g. the latitude and longitude of the center of the map, the width of the map, the height of the map, the image format and any customized overlay data). The server call containing this map data request is sent to the map server. The computing device receives the raw map data from the map server and then generates the bitmap locally, using any customized overlay data if requested and available.

The request for customized overlay data may be made to a server clustered with the map server, to a third-party server distinct from the map server, or it may already reside on the computing device. For example, the customized data may also be stored in a local cache or memory on the device.

Thus, an aspect of the present technology is a method, performed on a computing device, of generating a bitmap. The method entails generating a bitmap by transmitting a request for map data from a computing device to a map server, the request comprising a location for a map, a height of the map, a width of the map, and an image format. The method further entails receiving the map data for the map in response to transmitting the request for map data, and generating the bitmap locally on the computing device.

Another aspect of the present technology is a computer readable medium (or machine readable medium) comprising instructions in code which when loaded into memory and executed on a processor of a computing device causes the steps of the foregoing method to be performed.

Yet another aspect of the present technology is a computing device a memory coupled to a processor for executing an application programming interface (API). The device includes a user interface for receiving user input to cause the device to transmit a request for map data to a map server, the request comprising a location for a map, a height of the map, a width of the map, and an image format and receive the map data for the map. The processor and memory generate the bitmap locally on the computing device based on the map data received.

The details and particulars of these aspects of the technology will now be described below, by way of example, with reference to the attached drawings.

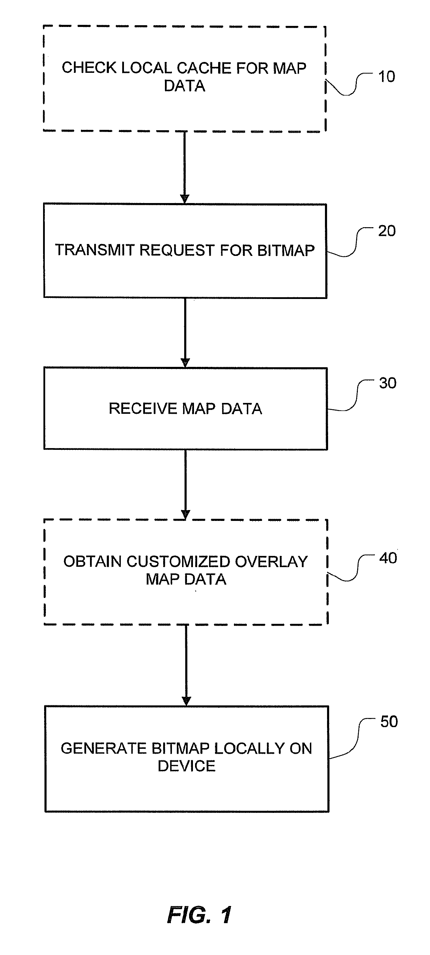

FIG. 1 is a flowchart outlining some of the main steps of a novel method of generating a bitmap. In general, and with reference to FIG. 1, this novel method entails a step 20 of transmitting a request for map data from a computing device to a map server. This request includes a location for a map, a height of the map, a width of the map, and an image format (e.g..bmp, .gif, .png, .jpg, etc.). In response to transmitting the request for map data, the method involves a step 30 of receiving the map data for the map. Finally, at step 50, the bitmap is generated locally on the computing device.

In one implementation, the novel method further involves a step 40 of obtaining customized overlay map data. This is done, as shown in FIG. 1, prior to generating the bitmap. The bitmap is thus generated by using (incorporating) both the map data and the customized overlay map data.

In one implementation, the novel method further involves obtaining the customized overlay map data by first checking a local cache on the computing device for the customized overlay map data (step 10). Where the local cache contains the customized overlay map data, retrieving the customized overlay map data from the cache. Where the local cache does not contain the customized overlay map data, fetching the customized overlay map data from a customized overlay map data server.

The server call is thus one single line of code as opposed to multiple lines of code, which is much simpler and more efficient for the developer. For example, the server call may be in the form: call_map_server[lat, long, width, height, format, customized data].

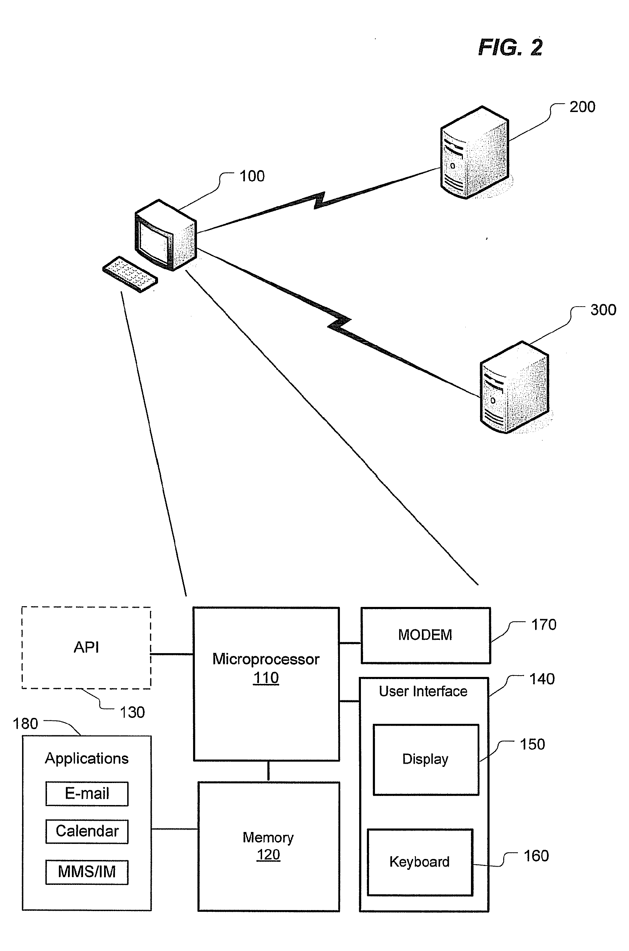

FIG. 2 depicts an example of a novel system for generating a static bitmap in accordance with principal implementations of the present technology.

As shown schematically in FIG. 2, a computing device 100 includes a microprocessor (referred to herein as a "processor") 110 operatively coupled to memory 120 for executing an application programming interface (API) 130. The computing device 100 has a user interface 140 which includes a display (e.g. an LCD screen) 150 and a keyboard 160. A MODEM 170 is provided for communication with a map server 200. The map server 200 stores map data for transmitting to the computing device upon receipt of a request for map data. The API 130 is accessible to other applications 180 running on the computing device, such as an e-mail application, a calendar application, an MMS or IM application or any other general or custom applications loaded or executing on the device. The memory 120 is configured to include a cache which is accessible to any of these applications via the API 130. In addition, as shown in FIG. 2, the system may optionally include a customized overlay map data server 300 for storing customized overlay map data. Customized overlay map data may include special labels, indicators, push-pins, points of interest, or any other information that the user may wish to overlay on the basic map. In a variant, the basic map data and the customized overlay map data may also be available from a cluster of related or interconnected servers.

Alternatively, this customized or third-party overlay map data may be preloaded or cached on the device. Overlay map data may be stored permanently in a non-volatile memory such as, for example, ROM, PROM, EPROM, Flash memory. Alternatively, a volatile memory such as, for example, RAM (e.g. DRAM, SRAM) may be used to cache the overlay map data on the device after it is received from an outside source such as the overlay map server 300.

In one specific implementation, the computing device consults its local cache to determine if the map data ("basic map data") and/or the customized overlay map data is already stored locally.

A settings, preferences or options page or menu may be accessible in the API to configure static map to be generated in a different format (i.e. a format other than a bitmap in the .bmp file format). The static map image may be generated in any number of file formats such as, for example, .png, .gif, .jpg, etc.

In another implementation of this technology, the location parameter that is sent (in the server call) to the map server and/or third-party overlay data server may be based on a variable location such as, for example, a set of location coordinates determined based on the current location of the computing device (e.g. using GPS or any other position-determining subsystem), a set of location coordinates of a mobile device being tracked by the computing device, or a set of location coordinates received in a communication. In other words, the location parameter may optionally be a variable where the variable is determined by the computing device before making the server call.

In another implementation, the height and width parameters may be variables that are determined by another application executing on the computing device. In other words, the size of the bitmap may be determined by another application which may allocate a certain amount of space for the bitmap.

In another implementation, the format may be determined by another application executing on the computing device.

Thus, while the server call may be manually coded with specific parameters to provide a specific bitmap of a specific location having specific height and width, the server call may also be coded with variables that are determined by the computing device.

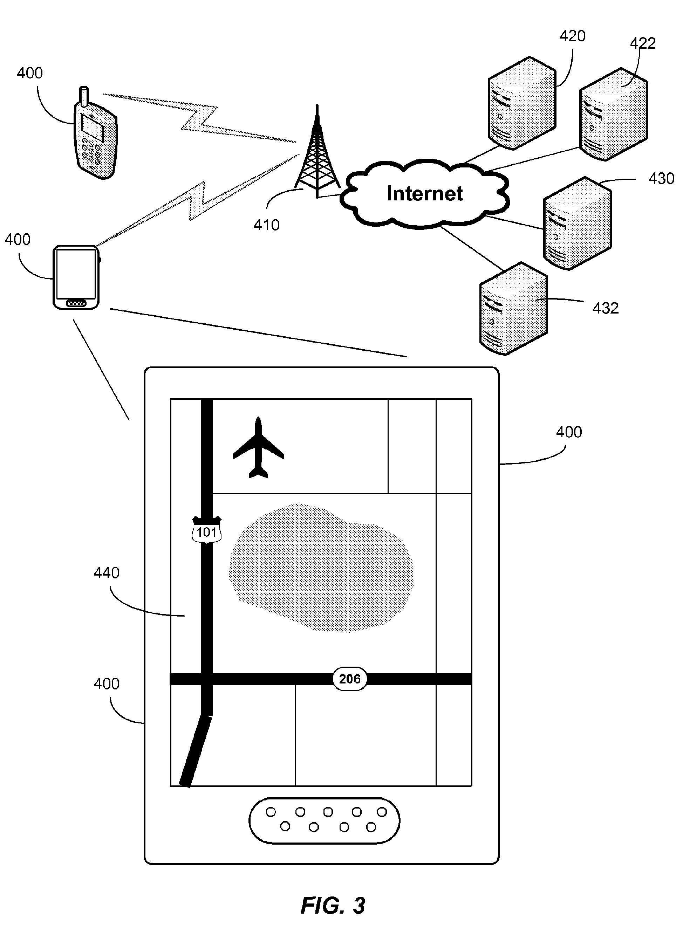

In another implementation, there may be more than one available map server. As depicted by way of example in FIGS. 3 to 6, a first map server 420 and a second map server 430 may be accessible via the Internet by a computing device such as a desktop computer, laptop, or mobile device 400. The first and second map servers may contain the same map data, different map data or partially overlapping map data. For example, a server call to the first map server 420 may obtain one type of map data whereas a server call to the second map server 420 may obtain a different type of map data. Different maps may include street maps, atlas-type terrain maps, topographical maps, weather maps, geological maps, etc. Alternatively, one map server may contain map data for one geographical region (e.g. North America) while the other map server may contain map data for a different geographical region (e.g. Europe).

In one particular implementation, the computing device may select one of a plurality of available map servers for obtaining the map data. Selection of the appropriate one of the map servers may be based on any number of criteria or conditions, including time, location, network congestion, etc.

The server call may specify a priority of map servers or may delegate the decision to an algorithm that determines which map server to contact.

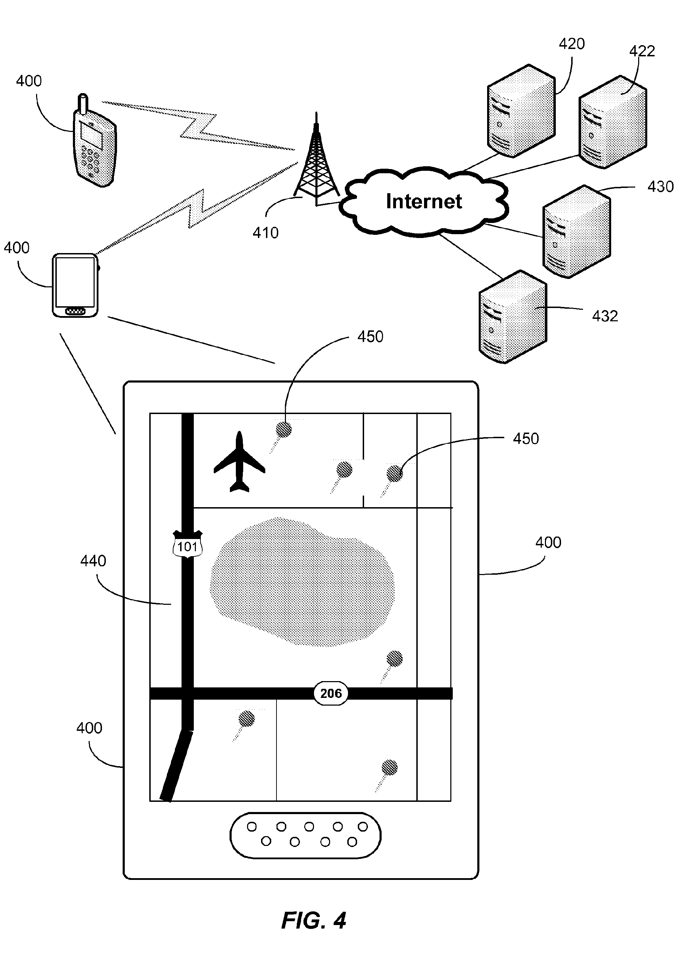

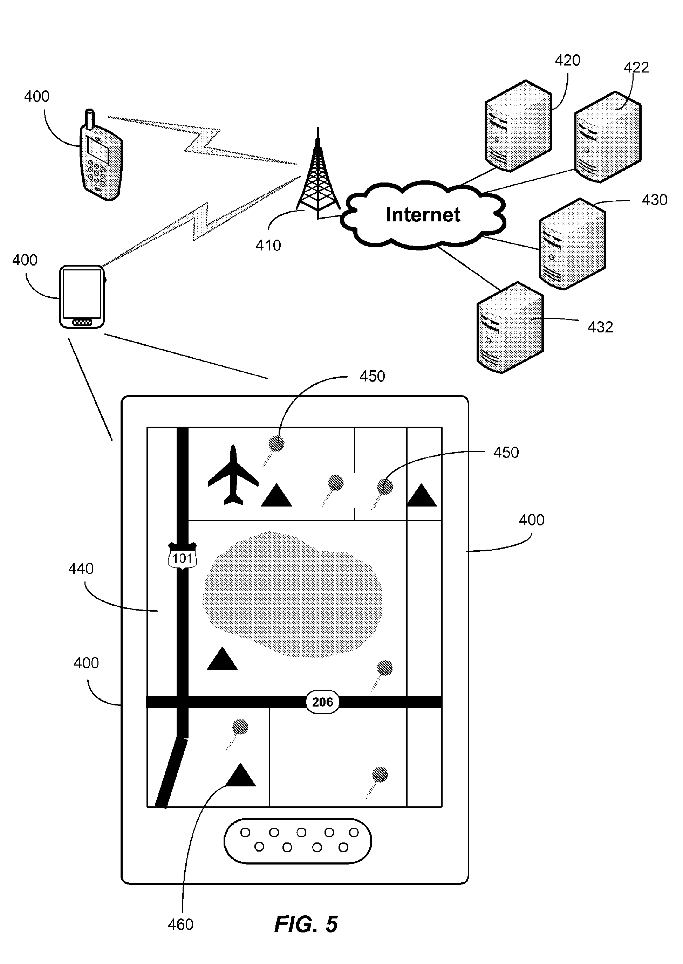

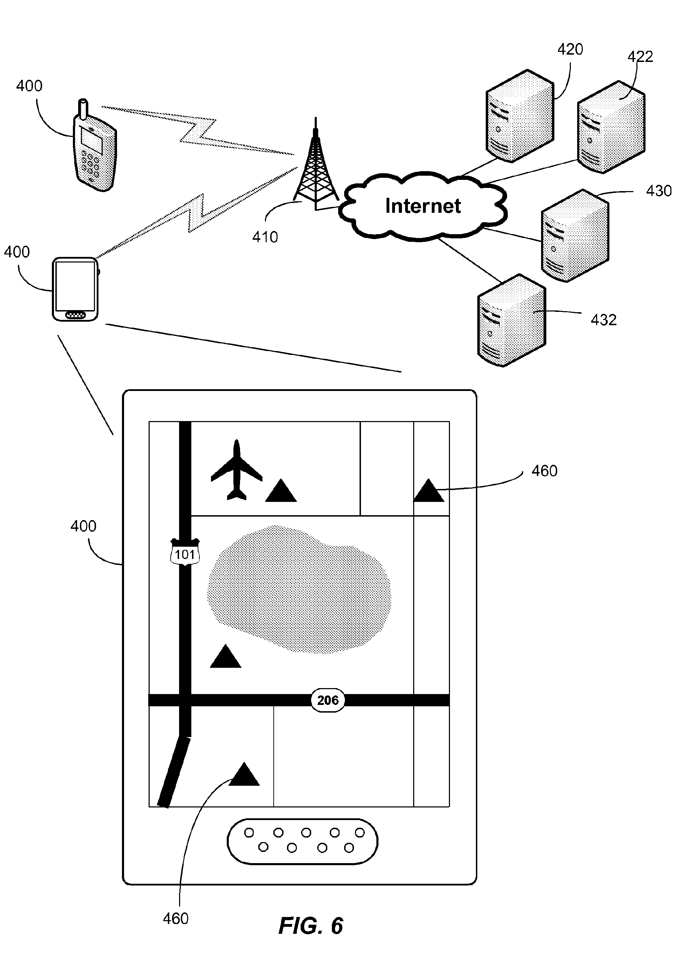

The server call may optionally specify whether third-party overlay data is to be obtained in addition to the basic map data. FIG. 3 shows an example of a basic map on a computing device without any third-party overlay data. FIGS. 4-6 show the same basic map with additional third-party overlay data overlaid on the basic map. Specifically, FIG. 4 shows an example of the map overlaid with Company A's overlay data. FIG. 5 shows an example of the map overlaid with overlay data from both Company A and Company B. FIG. 6 shows an example of the map overlaid with the overlay data only from Company B. The server call may be modified to select whether overlay data is to be obtained at all and, if so, which (or whose) overlay data to show on the map.

Third-party overlay data may be requested manually or automatically. If requested manually, the server call is coded with the appropriate information to request specific third-party overlay data from a specific data overlay server. If requested automatically, the computing device may rely on conditions that are predetermined, for example, by the user, system administrator or any other entity. For example, the overlay data may be requested based on time and/or location. In other words, time-based and/or location-based conditions may be used to trigger the request for overlay data. For example, if the computing device is located in a certain location (e.g. a certain neighbourhood, city, province, state, country, area code, etc.) that satisfies a location condition, then the overlay data may be requested. In this example, if the current location does not satisfy the location condition, no request is made.

Alternatively, and still with reference to FIGS. 3-6, if the location condition is met, the request for overlay data may be made to a specific overlay data server, e.g. a first overlay data server 430 (as opposed to a second overlay data server 432). Alternatively, the condition for triggering the request may be time-based, e.g. the request is made only during certain times of day or only on certain dates of the year. Alternatively, the time condition may specify from which server to contact for obtaining the overlay data (from among a plurality of available data overlay servers).

Therefore, the decisions whether to request overlay data, from which server to request this overlay data, and which type of overlay data to request can be made intelligently by the computing device based on predetermined conditions (e.g. predetermined time and/or location conditions).

In another implementation, the device may be configured to make a first server call to obtain a first set of third party overlay data from a first overlay data server 430 (for a first type of data) based on certain conditions and/or to make a second server call to obtain a second set of third party overlay data from a second server 432 (for a second, different type of data). For example, the user may wish to have pushpin icons 450 showing the locations of all establishments and retail outlets belonging to Company A on the map (as shown by way of example in FIG. 4) and to have triangular icons 460 showing the locations of all establishments and retail outlets belonging to Company B on the same map (as shown by way of example in FIG. 5).

The foregoing examples illustrate that the server call may be dynamically adapted based on various conditions to select map data and overlay data from any one of a plurality of available sources.

The foregoing method steps can be implemented in hardware, software, firmware or as any suitable combination thereof. These method steps may be implemented as software, i.e. as coded instructions stored on a computer readable medium which performs the foregoing steps when the computer readable medium is loaded into memory and executed by the microprocessor of the computing device. A computer-readable medium can be any means that contain, store, communicate, propagate or transport the program for use by or in connection with the instruction execution system, apparatus or device. The computer-readable medium may be electronic, magnetic, optical, electromagnetic, infrared or any semiconductor system or device. For example, computer executable code to perform the methods disclosed herein may be tangibly recorded on a computer-readable medium including, but not limited to, a floppy-disk, a CD-ROM, a DVD, RAM, ROM, EPROM, Flash Memory or any suitable memory card, etc. The method may also be implemented in hardware. A hardware implementation might employ discrete logic circuits having logic gates for implementing logic functions on data signals, an application- specific integrated circuit (ASIC) having appropriate combinational logic gates, a programmable gate array (PGA), a field programmable gate array (FPGA), etc.

This new technology has been described in terms of specific implementations and configurations which are intended to be exemplary only. Persons of ordinary skill in the art will appreciate that many obvious variations, refinements and modifications may be made without departing from the inventive concepts presented in this application. The scope of the exclusive right sought by the Applicant(s) is therefore intended to be limited solely by the appended claims.

## Claims

1. A method of generating a bitmap, the method comprising:
transmitting a request for map data from a computing device to a map server, the request comprising a location for a map, a height of the map, a width of the map, and an image format;
receiving the map data for the map in response to transmitting the request for map data; and
generating the bitmap locally on the computing device.

2. The method as claimed in claim 1 further comprising obtaining customized overlay map data prior to generating the bitmap, wherein generating the bitmap is accomplished by using both the map data and the customized overlay map data.

3. The method as claimed in claim 2 wherein obtaining the customized overlay map data comprises:
checking a local cache on the computing device for the customized overlay map data;
where the local cache contains the customized overlay map data, retrieving the customized overlay map data from the cache; and
where the local cache does not contain the customized overlay map data, fetching the customized overlay map data from a customized overlay map data server.

4. The method as claimed in any one of claims 1 to 3 comprising storing the bitmap in a local cache accessible to applications executing on the computing device.

5. A computer-readable medium comprising instructions in code which when loaded into memory and executed on a processor of a computing device are adapted to perform acts of:
transmitting a request for map data from a computing device to a map server, the request comprising a location for a map, a height of the map, a width of the map, and an image format;
receiving the map data for the map in response to transmitting the request for map data; and
generating the bitmap locally on the computing device.

6. The computer readable medium as claimed in claim 5 comprising code that:
causes the computing device to obtain customized overlay map data prior to generating the bitmap; and
generate the bitmap using both the map data and the customized overlay map data.

7. The computer readable medium as claimed in claim 6 comprising code that:
checks a local cache on the computing device for the customized overlay map data;
where the local cache contains the customized overlay map data, retrieves the customized overlay map data from the cache; and
where the local cache does not contain the customized overlay map data, fetches the customized overlay map data from a customized overlay map data server.

8. The computer readable medium as claimed in any one of claims 5 to 7 comprising code to cause the device to store the bitmap in a local cache accessible to applications executing on the computing device.

9. A computing device comprising:
a memory coupled to a processor for executing an application programming interface; and
a user interface for receiving user input to cause the device to:
transmit a request for map data to a map server, the request comprising a location for a map, a height of the map, a width of the map, and an image format; and
receive the map data for the map; and
wherein the processor and memory generate the bitmap locally on the computing device based on the map data received.

10. The computing device as claimed in claim 9 wherein the memory and processor are further configured to obtain customized overlay map data prior to generating the bitmap, wherein generating the bitmap is accomplished by using both the map data and the customized overlay map data.

11. The computing device as claimed in claim 10 wherein the memory and processor are further configured to obtain the customized overlay map data by:
checking a local cache on the computing device for the customized overlay map data;
where the local cache contains the customized overlay map data, retrieving the customized overlay map data from the cache; and
where the local cache does not contain the customized overlay map data, fetching the customized overlay map data from a customized overlay map data server.

12. The computing device as claimed in any one of claims 9 to 11 wherein the memory comprises a local cache for storing the bitmap for access by other applications running on the device.
